# EUROPEAN PATENT SPECIFICATION

(11) **EP 2 543 937 B1**
(45) Date of publication and mention of the grant of the patent: **26.02.2014**
(21) Application number: 12174708.3
(22) Date of filing: 03.07.2012
(51) Int. Cl.: F24J 2/04, E06B 7/10, F24F 13/18

(54) **Energy harnessing self-supporting industrialized system for buildings**
Selbsttragendes industrialisiertes System für Gebäude zum Zunutzemachen von Energie
Système industrialisé autoportant de captation de lýénergie pour bâtiments

(30) Priority: 04.07.2011 ES 201100747
(43) Date of publication of application: 09.01.2013
(73) Proprietor: Construcciones ACR, S.A.U., 31195 Aizoain (ES)
(72) Inventor: Sánchez-Ostiz Gutiérrez, Ana, 31195 AIZOAIN (ES); Monge Barrio, Aurora, 31195 AIZOAIN (ES); González Martínez, Purificación, 31195 AIZOAIN (ES); Domingo Irigoyen, Silvia, 31195 AIZOAIN (ES); Bustinza Esparta, Jorge, 31195 AIZOAIN (ES)
(74) Representative: Cabinet Plasseraud

(56) References cited:
- EP-A2- 1 486 637
- WO-A1-2006/000159
- US-A- 3 925 945
- US-A- 4 050 443
- US-A- 4 577 619

## Description

### Field of the Art

The present invention relates to the thermal conditioning of the interior of buildings, proposing a system which allows collaborating in that thermal conditioning by means of harnessing solar energy in an industrialized component.

### State of the Art

Energy consumption is one of the major problems faced by humanity today, so the search for alternatives to replace traditional fossil fuels has became a priority both due to the limited availability and the subsequent cost of the mentioned fossil fuels and to the environmental pollution caused by using same.

To counter that problem, technological research has essentially been aimed at searching for solutions which allow harnessing available renewable energies with an acceptable practical profitability.

In that sense, to reduce energy consumption for heating the interior of buildings, a system comprising building a greenhouse or lookout principally attached to the south facade comprising a completely or partially glazed two-sheet (an outer sheet and an inner sheet) element which takes advantage of the greenhouse effect to capture free solar energy and heat the living space attached to it, is known. Both sheets are operable for their correct operation and cleaning.

In this manner, between the two sheets of the facade there is an intermediate chamber in which the heat from the solar radiation striking the wall is stored such that the holes of the lower part and of the upper part of the inner sheet can be opened and thus the cold air from the interior of the building exits through the lower holes and rises up through the intermediate chamber where it is heated by the heat stored in said chamber, the hot air exiting again to the interior of the building through the upper holes, whereby a recirculation of air with intermediate heating thereof by the heat provided by solar radiation is achieved for heating the interior of the building.

When there is no heat input by solar radiation and the intermediate chamber of the facade tends to cool off, the holes of the inner sheet are closed. The intermediate chamber also works as an insulator to better conserve the heat of the interior of the building.

US-A-4577619 discloses an energy harnessing self-supporting industrialized system for buildings according to the preamble of claim 1.

### Object of the Invention

The invention proposes a solar energy harnessing self-supporting industrialized component which allows capturing, storing, distributing and conserving energy. This component comprises an insulated metal frame containing a system made up of two glazed sheets operable in their larger part and with horizontal grids principally in the lower part. The system also incorporates one or two sun protection systems (SPS) and a storage system for storing water (or other liquids) which is heated for free by solar radiation. The entire system aids in improving comfort conditions in winter.

This system object of the invention comprises incorporating a double glass sheet construction or the like in specific areas of the outer facades, each of the sheets forming opening and closing means by way of grids or windows or doors with holes for the passage of air in the lower part and in the upper part in the inner sheet and optionally in the lower part of the outer sheet, a technical shade susceptible of being raised and lowered being included in the middle area between the two sheets and a tank containing a liquid being included in a partial area in the chamber between the two sheets.

A self-supporting industrialized assembly is obtained which allows selectively establishing, depending on the outdoor conditions and on the desired indoor thermal conditioning, different opening and closing arrangements in relation with the interior and the exterior of the building, by means of the opening and closing means formed in the inner and outer sheets, in combination with the raising and lowering of the intermediate technical shade.

On the other hand, the tank containing a liquid incorporated between the two sheets of the structural assembly acts as a storage for storing the heat provided by the solar radiation striking that self-supporting industrialized enclosure assembly, allowing establishing a selective proportioning of the transmission of said heat towards the interior of the building, whereby the thermal conditioning usage effectiveness can be prolonged by means of the system during the time periods in which no solar radiation is received.

In view of the foregoing, the system of the invention obviously has several advantageous features to perform the intended function as a heater by means of harnessing solar energy, acquiring its own identity and preferred character with respect to the conventional systems of the same type.

### Description of the Drawings

Figure 1 shows a vertically sectioned side view of an example of application of the system of the invention in an embodiment with operable windows and the tank containing liquid in a horizontal position inside the structural assembly of the system.
Figure 2 is a front view on the outer face of the structural assembly of the system according to the embodiment of the preceding figure.
Figure 3 is sectioned plan view of the structural assembly of the system according to the same embodiment.
Figure 4 is a front view from the inner face of the structural assembly of the system in the same embodiment.
Figure 5 shows a sectioned side view of another example of application of the system of the invention in an embodiment with operable doors and the tank containing liquid in a vertical position inside the structural assembly of the system.
Figure 6 is a front view from the outer face of the structural assembly of the system according to the embodiment of the preceding figure.
Figure 7 is sectioned plan view of the structural assembly of the system according to said embodiment of Figure 5.
Figure 8 is a front view from the inner face of the structural assembly of the system according to that embodiment of Figure 5.

### Detailed Description of the Invention

The object of the invention relates to a system to improve heat harnessing from solar radiation for heating the interior of buildings, being based on making the outer walls of the building of application with a self-supporting industrialized component made up of a double glass sheet and an intermediate chamber, determining in the lower part and in the upper part of the inner sheet holes provided with an operable closure. Likewise, the outer sheet in the lower part may or may not incorporate opening grids.

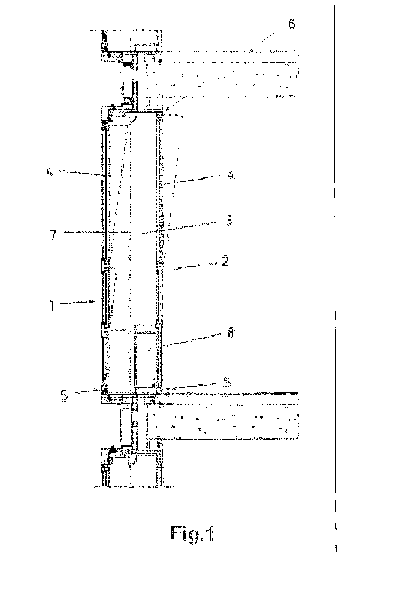

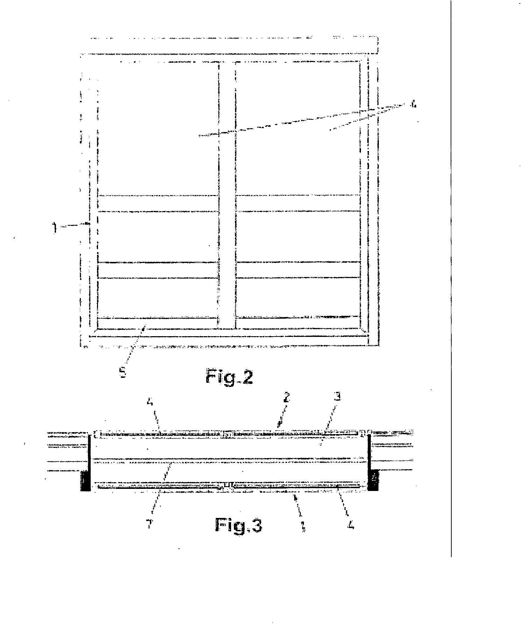

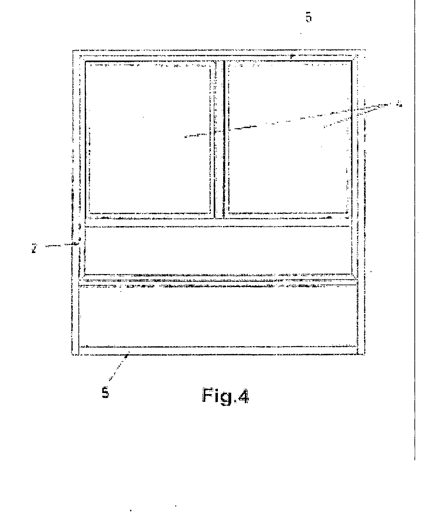

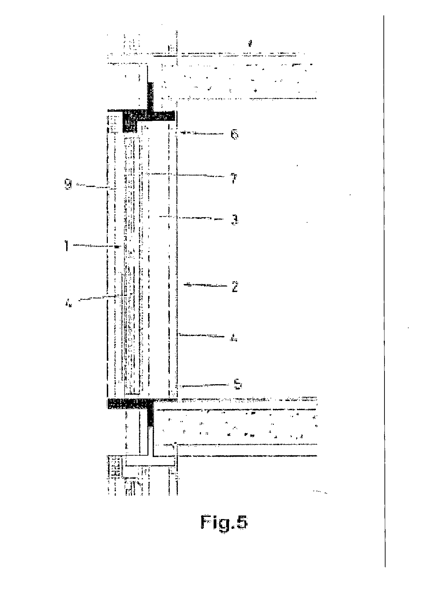

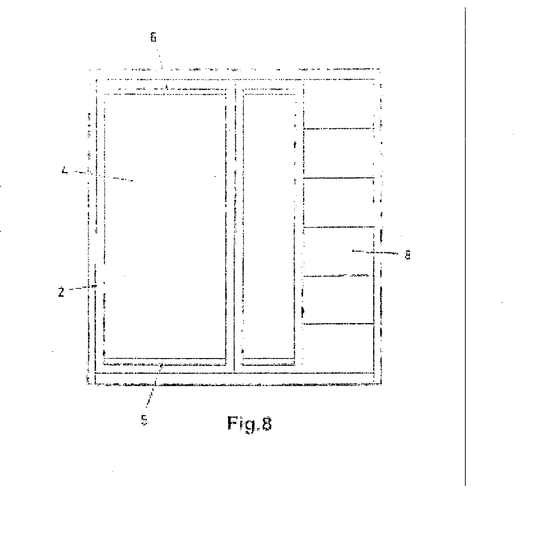

According to the system object of the invention, on the outer walls of the building of application there is incorporated the energy harnessing industrialized component made up of two glass sheets (1 and 2) or the like separated by an intermediate chamber (3), each of said sheets (1 and 2) incorporating opening and closing means (4) which can be in the form of grids and windows, such as in the embodiment of Figures 1 to 4, or in the form of doors, such as in the embodiment of Figures 5 to 8, according to any of the conventional versions thereof, sliding, swinging, etc.

Holes (5 and 6) for the passage of air are determined, respectively, in the lower part and the upper part of the inner sheet (2) of that self-supporting industrialized component respectively determine, which holes can be defined by independent grooves with swiveling grids or sliding runners or such as in the embodiment of Figures 1 to 4, the holes can be determined, if the arrangement so allows, by the means (4) themselves in the form of windows or doors determined in the mentioned inner sheet (2).

In the intermediate chamber (3) separating the outer sheet (1) from the inner sheet (2), there is arranged a technical shade (7) susceptible of being raised and lowered, for example by means of winding and unwinding, though this solution is not limiting, such that by means of this technical shade (7) an opaque covering can be selectively established between the sheets (1 and 2) or the space of the intermediate chamber (3) between both sheets (1 and 2) can be left clear. It is thus a self-supporting industrialized assembly storing in the intermediate chamber (3) the heat from the solar radiation which strikes it through the outer sheet (1), such that by opening the holes (5 and 6) of the lower part and of the upper part of the inner sheet (2), a circulation of air from the interior of the building of application is obtained, the air entering through the lower hole (5) and rising up through the intermediate chamber (3) where it is heated to then exit through the upper hole (6), thus heating said air inside the building lowers the heating energy expenditure for the thermal conditioning of the interior of the building. It can also work with all its elements closed by way of buffer space.

By means of raising and lowering the technical shade (7) a transparent arrangement or an insulating arrangement with respect to the passage of light can be established through the structural assembly of the system with the possibility of regulating partial situations between both arrangements; and furthermore, by means of combining said raising and lowering of the technical shade (7), with the opening and closing of the means (4) arranged in the outer sheet (1) and in the inner sheet (2), different situations can be established to optimize room comfort of the interior of the building of application.

In that sense, an arrangement can, for example, be established for a summer day where the means (4) of the outer sheet (1) are open, the means (4) of the inner sheet (2) are closed and the technical shade (7) is completely lowered over the inner sheet and the storage tank; or an arrangement for a summer night where the means (4) of both sheets (1 and 2) are open and the technical shade (7) raised; and an arrangement for a winter day where all the means (4) are closed and the technical shade (7) raised; or an arrangement for a winter night where all the means (4) are closed and the technical shade (7) lowered. However these arrangements do not have a limiting character since other arrangements can also be established at the convenience of the users.

In a partial area of the intermediate chamber (3) there is further included a tank (8) containing a liquid, said tank (8) being able to be arranged horizontally, for example in the lower part of the intermediate chamber (3), such as in the embodiment of Figures 1 to 4, or vertically, for example on one side of the intermediate chamber (3), such as in the embodiment of Figures 5 to 8.

The solar radiation which strikes (1) the storage tank (8) through the outer sheet located in the intermediate chamber (3) is stored in the liquid contained in the tank (8), which therefore acts as a heat storage, allowing maintaining said heat over a longer time to proportion its transmission into the interior of the building of application when there is no solar radiation that provides heat.

It is envisaged that the tank (8) has a filling inlet and a draining outlet provided with corresponding operable keys or closing means, such that said tank (8) can be filled and emptied as appropriate, for example, filling it in winter so that it works as a heat storage so that the system collaborates with the heating of the interior of the building of application, and emptying it in summer so that heat is not stored.

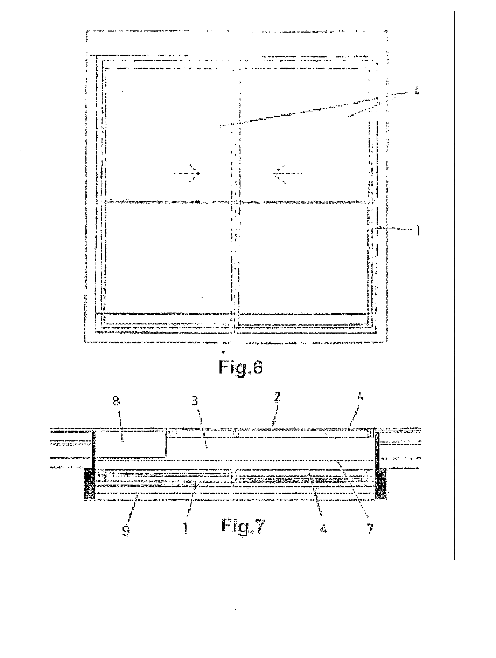

As seen in Figures 5 and 7 the outer part of the self-supporting industrialized component can additionally incorporate a movable slat blind (9) in a raised and lowered arrangement in front of said structural assembly of the system, the raised and lowered positions of that blind (9) likewise being able to be combined with the arrangements of the means (4) and the technical shade (7) of the structural assembly of the system, for establishing optimized situations of comfort for the thermal ambience of the interior of the building of application.

## Claims

1. An energy harnessing self-supporting industrialized system for buildings, comprising a self-supporting industrialized component having a transparent or translucent enclosure made up of an outer sheet (1) and another inner sheet (2) separated by an intermediate chamber (3), the inner sheet (2) having in the lower part and in the upper part holes (5 and 6) provided with operable closures for the passage of air, wherein in the outer sheet (1) and in the inner sheet (2) there are arranged closing and opening means (4) in the form of grids or windows or doors, there being in the intermediate chamber (3) a technical shade (7) which can be raised and lowered to determine an opaque separation as sun protection or heat conservation, or a clear space between both sheets 1 and 2 for capturing solar radiation, **characterized in that** in a partial area of the mentioned intermediate chamber (3) there is included a tank (8) containing a liquid acting as a heat storage storing the heat collected **in that** intermediate chamber (3) due to the solar radiation striking it through the outer sheet (1).

2. The energy harnessing self-supporting industrialized system for buildings according to claim 1, **characterized in that** the tank (8) containing a liquid is arranged horizontally in the lower part of the intermediate chamber (3).

3. The energy harnessing self-supporting industrialized system for buildings according to claim 1, **characterized in that** the tank (8) containing a liquid is arranged vertically on one side of the intermediate chamber (3).

4. The energy harnessing self-supporting industrialized system for buildings according to claim 1, **characterized in that** the tank (8) containing a liquid has a filling inlet and an emptying outlet provided with respective operable keys or closing means.

5. The energy harnessing self-supporting industrialized system for buildings according to claim 1, **characterized in that** in the outer part of the self-supporting industrialized assembly formed by the outer sheet (1) and inner sheet (2) separated by the intermediate chamber (3), a movable slat blind (9) susceptible of being raised and lowered can additionally be incorporated in front of said assembly.

## Patentansprüche

1. Selbsttragendes industrialisiertes Energiegewinnungssystem für Gebäude, umfassend ein selbsttragendes industrialisiertes Bauteil mit einem transparenten und durchscheinenden Gehäuse, das aus einer Außenplatte (1) und einer weiteren Innenplatte (2) hergestellt ist, die durch eine Zwischenkammer (3) getrennt sind, wobei die Innenplatte (2) in dem unteren Teil und in dem oberen Teil Löcher (5 und 6) aufweist, die mit betätigbaren Verschlüssen für den Durchgang von Luft bereitgestellt sind, wobei in der Außenplatte (1) und der Innenplatte (2) Verschluss- und Öffnungsmittel (4) in Form von Gittern oder Fenstern oder Türen angeordnet sind, wobei in der Zwischenkammer (3) eine technische Abschirmung (7), die angehoben und abgesenkt werden kann, um eine undurchsichtige Trennung als Sonnen- oder Wärmeschutz festzulegen, oder ein durchsichtiger Raum zwischen den beiden Platten (1 und 2) zum Aufnehmen von Sonnenstrahlung vorhanden ist, **dadurch gekennzeichnet, dass** in einem Teilbereich der Zwischenkammer (3) ein Behälter (8) vorhanden ist, der eine Flüssigkeit enthält, die als Wärmespeicher fungiert und die Wärme, die in der Zwischenkammer (3) gesammelt wird, die aufgrund der Sonneneinstrahlung, die durch die Außenplatte (1) dorthin gelangt, speichert.

2. Selbsttragendes industrialisiertes Energiegewinnungssystem für Gebäude nach Anspruch 1, **dadurch gekennzeichnet, dass** der Behälter (8), der eine Flüssigkeit enthält, horizontal in dem unteren Teil der Zwischenkammer (3) angeordnet ist.

3. Selbsttragendes industrialisiertes Energiegewinnungssystem für Gebäude nach Anspruch 1, **dadurch gekennzeichnet, dass** der Behälter (8), der eine Flüssigkeit enthält, vertikal auf einer Seite der Zwischenkammer (3) angeordnet ist.

4. Selbsttragendes industrialisiertes Energiegewinnungssystem für Gebäude nach Anspruch 1, **dadurch gekennzeichnet, dass** der Behälter (8), der eine Flüssigkeit enthält, einen Fülleinlass und einen Entleerungsauslass aufweist, die mit entsprechenden betätigbaren Tastern oder Verschlussmitteln bereitgestellt sind.

5. Selbsttragendes industrialisiertes Energiegewinnungssystem für Gebäude nach Anspruch 1, **dadurch gekennzeichnet, dass** der Außenteil der selbsttragenden industrialisierten Anordnung, die von der Außenplatte (1) und der Innenplatte (2) gebildet wird, die von der Zwischenkammer (3) getrennt sind, ein bewegliches Lamellentor (9) aufweist, das angehoben und abgesenkt werden kann und zusätzlich vorne in der Baugruppe aufgenommen sein kann.

## Revendications

1. Système industrialisé autoportant de captation de l'énergie pour bâtiments, comprenant un composant industrialisé autoportant avec une enceinte transparente ou translucide constituée d'une feuille extérieure (1) et d'une autre feuille intérieure (2) séparées par une chambre intermédiaire (3), la feuille intérieure (2) présentant dans la partie inférieure et dans la partie supérieure des trous (5 et 6) dotés de fermetures actionnables pour le passage de l'air, dans lequel des moyens de fermeture et d'ouverture (4) sous forme de grilles, fenêtres ou portes sont disposés dans la feuille extérieure (1) et dans la feuille intérieure (2), la chambre intermédiaire (3) contenant un store technique (7) qui peut être levé et abaissé pour déterminer une séparation opaque servant de protection solaire ou servant à conserver la chaleur ou un espace libre entre les deux feuilles (1 et 2) pour capturer le rayonnement solaire, **caractérisé en ce qu'**une zone partielle de ladite chambre intermédiaire (3), inclut un réservoir (8) contenant un liquide agissant comme un dispositif de stockage de chaleur stockant la chaleur collectée dans cette chambre intermédiaire (3) due au rayonnement solaire le heurtant au travers de la feuille extérieure (1)

2. Système industrialisé autoportant de captation de l'énergie pour bâtiments selon la revendication 1, **caractérisé en ce que** le réservoir (8) contenant un liquide est disposé horizontalement dans la partie inférieure de la chambre intermédiaire (3).

3. Système industrialisé autoportant de captation de l'énergie pour bâtiments selon la revendication 1, **caractérisé en ce que** le réservoir (8) contenant un liquide est disposé verticalement sur un côté de la chambre intermédiaire (3).

4. Système industrialisé autoportant de captation de l'énergie pour bâtiments selon la revendication 1, **caractérisé en ce que** le réservoir (8) contenant un liquide présente une entrée de remplissage et une sortie de vidage dotées de clés ou moyens de fermeture actionnables respectifs.

5. Système industrialisé autoportant de captation de l'énergie pour bâtiments selon la revendication 1, **caractérisé en ce que** dans la partie extérieure de l'ensemble industrialisé autoportant formé par la feuille extérieure (1) et la feuille intérieure (2) séparées par la chambre intermédiaire (3), un store à lamelles mobile (9) susceptible d'être levé ou abaissé peut en outre être incorporé devant ledit ensemble.
